# EUROPÄISCHE PATENTSCHRIFT

(11) **EP 0 359 123 B1**
(45) Veröffentlichungstag und Bekanntmachung des Hinweises auf die Patenterteilung: **25.05.1994**
(21) Anmeldenummer: 89116533.4
(22) Anmeldetag: 07.09.1989
(51) Int. Cl.: G03G 9/097, C09B 67/20, C09B 41/00, C09B 63/00, G03G 9/09

(54) **Verfahren zur gezielten Beeinflussung des triboelektrischen Effektes von Azopigmenten**
Process to influence selectively the triboelectric effect of azopigments
Procédé pour influencer distinctement l'effet triboélectrique de pigments azoiques

(30) Priorität: 15.09.1988 DE 3831384
(43) Veröffentlichungstag der Anmeldung: 21.03.1990
(73) Patentinhaber: HOECHST AKTIENGESELLSCHAFT, 65926 Frankfurt am Main (DE)
(72) Erfinder: Macholdt, Hans-Tobias, Dr., D-6100 Darmstadt (DE); Sieber, Alexander, Dr., D-6230 Frankfurt am Main 80 (DE); Schui, Franz, D-6230 Frankfurt am Main 80 (DE); Deubel, Reinhold, Dr., D-6232 Bad Soden am Taunus (DE)

(56) Entgegenhaltungen:
- EP-A- 0 053 888
- EP-A- 0 161 128
- GB-A- 2 081 921
- PATENT ABSTRACTS OF JAPAN vol. 10, no. 305 (P-507)(2361) 17 Oktober 1986, & JP-A-61 120164

## Beschreibung

Die vorliegende Erfindung betrifft ein Verfahren zur gezielten Beeinflussung des triboelektrischen Effektes von Azopigmenten, insbesondere von verlackten Azopigmenten (d.h. Metallsalzen von Azopigmenten), in elektrophotographischen Tonern oder Entwicklern oder in Pulvern zur Oberflächenbeschichtung durch Zusatz von speziellen salzartigen kationischen Verbindungen bei der Kupplungsreaktion, bei der Verlackung (Metallsalzbildung) oder beim Finish, sowie die Verwendung der mit den salzartigen, kationischen Verbindungen versehenen Azopigmente zur Herstellung von Tonern oder Entwicklern, die zum elektrophotographischen Kopieren bzw. Vervielfältigen von Vorlagen oder zum Drucken von elektronisch, optisch oder magnetisch gespeicherten Informationen oder im Colorproofing sowie zur Herstellung von Pulvern oder Pulverlacken, die zur Oberflächenbeschichtung von Gegenständen aus Metall, Holz, Kunststoffen, Glas, Keramik, Beton, Textilmaterialien, Papier oder Kautschuk dienen, eingesetzt werden.

Bei elektrophotographischen Aufzeichnungsverfahren wird auf einem Photoleiter ein "latentes Ladungsbild" erzeugt. Dies erfolgt beispielsweise durch Aufladung des Photoleiters durch eine Corona-Entladung und anschließende bildmäßige Belichtung der elektrostatisch aufgeladenen Oberfläche des Photoleiters, wobei durch die Belichtung der Ladungsabfluß zur geerdeten Unterlage an den belichteten Stellen bewirkt wird. Anschließend wird das so erzeugte "latente Ladungsbild" durch Aufbringen eines Toners entwickelt.
In einem darauffolgenden Schritt wird der Toner vom Photoleiter auf beispielsweise Papier, Textilien, Folien oder Kunststoff übertragen und dort beispielsweise durch Druck, Strahlung, Hitze oder Lösungsmitteleinwirkung fixiert. Der benutzte Photoleiter wird anschließend gereinigt und steht für einen neuen Aufzeichnungsvorgang zur Verfügung.
In zahlreichen Patentschriften wird die Optimierung von Tonern beschrieben, wobei u.a. der Einfluß des Tonerbindemittels (Variation von Harz/Harzkomponenten oder Wachs/Wachskomponenten), der Einfluß von Steuermitteln oder anderen Zusatzstoffen oder der Einfluß von Carriern (bei Zweikomponentenentwicklern) und Magnetpigmenten (bei Einkomponentenentwicklern) untersucht wurden (US-PS 2 221 776). Ein Maß für die Tonerqualität ist seine spezifische Aufladbarkeit Q/M (Ladung pro Masseeinheit).

Neben Vorzeichen und Höhe der Toneraufladung ist vor allem das Aufladungsprofil in Abhängigkeit von der Aktivierdauer zur exakten Beschreibung des triboelektrischen Verhaltens eines Toners bzw. Entwicklers besonders geeignet.

Die Verwendung von Azopigmenten als Farbmittel in elektrophotographischen Tonern ist seit langem bekannt. Darüberhinaus ist bekannt, daß Azopigmente (JA-OS 60-108 863) und insbesondere verlackte Azopigmente (JA-OS 62-71 966 sowie H.T. Macholdt, A. Sieber, Dyes and Pigments 9, 119-127 (1988)) den elektrophotographischen Tonern eine hohe negative triboelektrische Aufladung verleihen.

Dementsprechend schwierig ist es z.B. triboelektrisch positiv aufladbare Toner mit Azopigmenten, insbesondere mit verlackten Azopigmenten, herzustellen. In der JA-OS 60-118 851 wird der Versuch beschrieben, dieses Problem durch Nigrosinzugabe zu lösen. Nigrosin wirkt zwar in diesem Toner als positives Ladungssteuermittel, ist aber wegen seiner schwarzen Eigenfarbe für Bunttoner problematisch.

Ein anderes Vorgehen wird in DE 36 29 445 beschrieben. Durch Beimengen von C.I. Pigment Red 81 (Triarylcarbonium-Pigment) in die Toner, welche ein verlacktes Azopigment als Farbmittel enthalten, gelingt es, dem Toner eine positive Aufladbarkeit zu verleihen.

Darüberhinaus ist generell die Anwendung von farblosen Ladungssteuermitteln bekannt, wodurch ermöglicht wird, die gewünschte Toneraufladbarkeit einzustellen (US-PS 43 24 851, EP 0 161 128).

Allen vorstehend genannten Lösungsansätzen haftet der Mangel an, daß das ladungssteuernde Additiv zusätzlich zu dem Pigment und den anderen Tonerinhaltsstoffen in das Tonerharz eingearbeitet werden muß, was Probleme hinsichtlich der Gleichverteilung, der Verträglichkeiten und der Migration mit sich bringt und darüberhinaus einen zusätzlichen Arbeitsgang bedingt.

Bei Farbtonern für Prozessfarbe müssen die drei Toner Gelb, Cyan und Magenta neben den genau definierten farblichen Anforderungen auch hinsichtlich ihrer triboelektrischen Eigenschaften exakt aufeinander abgestimmt sein. Die triboelektrische Abstimmung ist erforderlich, weil beim Vollfarbdruck bzw. bei der Vollfarbkopie aufeinanderfolgend die drei Farbtoner (bzw. vier Farbtoner, wenn Schwarz miteinbezogen wird) im selben Gerät übertragen werden müssen. Besitzen nun die Farbpigmente Gelb, Cyan und Magenta unterschiedliche triboelektrische Effekte auf die Toneraufladbarkeit, so ist es nicht möglich, sie in eine einmal erstellte Tonerbasisrezeptur als ausschließliches Farbmittel hinzuzufügen. Vielmehr kann es dann notwendig werden, für jedes Farbmittel eine eigene Rezeptur zu entwickeln, für welches z.B. Art und Menge des benötigten Ladungssteuermittels speziell optimiert werden müssen. Dieses Vorgehen ist entsprechend aufwendig und kommt bei Farbtonern für Prozessfarbe noch zusätzlich zu den bereits beschriebenen Schwierigkeiten dazu.

Ziel der vorliegenden Erfindung war es daher, ein Verfahren zur gezielten Beeinflussung des triboelektrischen Effektes von Azopigmenten, insbesondere verlackten Azopigmenten in elektrophotographischen Tonern oder Entwicklern oder in Pulvern zur Oberflächenbeschichtung zu finden. Das Verfahren sollte die coloristischen Eigenschaften und die Echtheiten des jeweiligen Azopigmentes nicht beeinflussen und sollte darüberhinaus die üblicherweise bei der Synthese oder bei der Nachbehandlung der Azopigmente gegebenen Möglichkeiten des Einflusses auf das coloristische Verhalten und die Echtheitseigenschaften der Azopigmente nicht mindern.
Insbesondere bestand das Bedürfnis, das jeweilige Azopigment triboelektrisch neutralisieren zu können. Unter "triboelektrisch neutralem Verhalten" versteht man, daß das Pigment in dem jeweiligen Toner oder Entwickler keinen Einfluß auf deren Aufladbarkeit ausübt, was wiederum bedeutet, daß die Einstellung des triboelektrischen Effektes eines Pigmentes in kleinsten Schritten möglich sein muß, um ihn so optimal in das jeweilige System einzupassen.

Darüberhinaus ist die Beeinflussung des triboelektrischen Effektes von Pigmenten auch für deren Einsatz in Pulvern und Pulverlacken, insbesondere in triboelektrisch bzw. elektrokinetisch versprühten Pulverlacken, zur Oberflächenbeschichtung von Gegenständen aus beispielsweise Metall, Holz, Kunststoff, Glas, Keramik, Beton, Textilmaterial, Papier oder Kautschuk von Interesse, da Pigmente einen maßgeblichen Einfluß auch auf die Aufladbarkeit von Pulverlacken haben können (DE-OS 3 737 495).

Besonders vordringlich war es, ein Verfahren zur gezielten Beeinflussung des triboelektrischen Effektes von Azopigmenten, insbesondere verlackten Azopigmenten, zu finden, da einerseits diese Pigmente einen überaus hohen triboelektrischen Effekt aufweisen und andererseits so bedeutende Pigmente wie z.B. C.I. Pigment Red 48, 53, 57 oder C.I. Pigment Yellow 12, 17, 81, 97 zu dieser Pigment-Klasse gehören.

Überraschenderweise wurde nun gefunden, daß man den triboelektrischen Effekt von Azopigmenten in elektrophotographischen Tonern oder Entwicklern sowie in Pulvern zur Oberflächenbeschichtung gezielt beeinflussen kann, indem man den Azopigmenten bei der Kupplungsreaktion, der Verlackung (Metallsalzbildung) oder beim Finish mindestens eine salzartige kationische Verbindung der allgemeinen Formeln 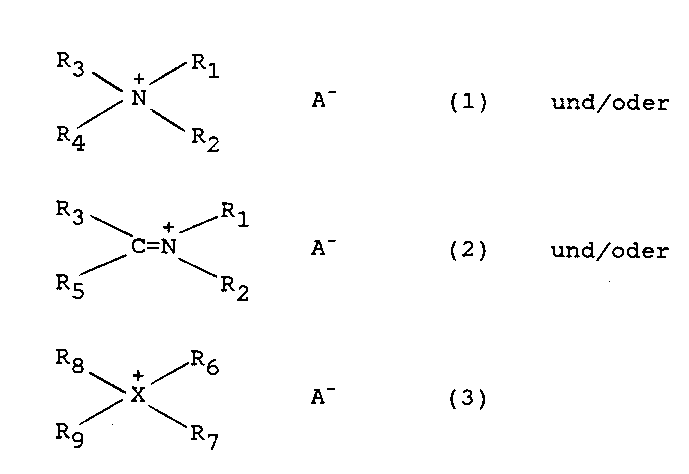
zusetzt, worin im Falle der allgemeinen-Formeln (1) und (2) R₁, R₂, R₃ und R₄ unabhängig voneinander Wasserstoffatome, geradkettige oder verzweigte Alkylgruppen von 1 bis 30 Kohlenstoffatomen, vorzugsweise von 1 bis 22 Kohlenstoffatomen, Oxethylgruppen der allgemeinen Formel -(CH₂-CH₂-O)ₙ-R, worin R eine Wasserstoffatom oder eine Alkyl(C₁-C₄)-gruppe, Acylgruppe, wie beispielsweise die Acetyl-, Benzoyl- oder Naphthoylgruppe, und n eine Zahl von 1 bis 10, vorzugsweise von 1 bis 4 bedeuten, ein- oder mehrkernige cycloaliphatische Reste von 5 bis 12 Kohlenstoffatomen, wie beispielsweise Cyclopentyl- oder Cyclohexylgruppen, ein- oder mehrkernige aromatische Reste, wie beispielsweise Phenyl-, 1-Naphthyl-, 2-Naphthyl-, Tolyl- oder Biphenylreste, oder araliphatische Reste, wie beispielsweise den Benzylrest, darstellen, wobei die aliphatischen, araliphatischen und aromatischen Reste durch Hydroxy-, Alkoxy(C₁-C₄)-, primäre, sekundäre oder tertiäre Aminogruppen, wie beispielsweise N-Monoalkyl-(C₁-C₄)amino- oder N,N-Dialkyl-(C₁-C₄)aminogruppen, ferner durch Säureamid- oder Säureimidgruppen, bevorzugt Phthalimid- oder Naphthalimidgruppen, sowie durch Fluor-, Chlor- oder Bromatome, die aliphatischen Reste insbesondere durch 1 bis 33 Fluoratome, substituiert sein können, R₅ ein Wasserstoff-, Fluor-, Chlor- oder Bromatom oder eine Alkyl(C₁-C₆)-, Alkoxy(C₁-C₆)- oder primäre Aminogruppe bedeutet, und A⁻ das Äquivalent eines Anions, wie beispielsweise Halogenid, bevorzugt Bromid und Chlorid, oder Sulfat, Hydrogensulfat, Hydroxid, Tetrafluoroborat, Hexafluorophosphat, Thiocyanat, Perchlorat, Hexafluoroarsenat oder Phosphat darstellt, und wobei R₁ und R₃ Teil eines Ringsystems mit 5 bis 7 Kohlenstoffatomen sein können, das durch 1 oder 2 Heteroatome, wie beispielsweise ein Stickstoff-, Sauerstoff- oder Schwefelatom, unterbrochen sein und 0 bis 3 Doppelbindungen enthalten kann (als Verbindungen dieser Art seien beispielsweise Pyridin-, Piperidinsalze und deren Derivate genannt), als Einzelverbindungen seien beispielsweise genannt Hexadecyltrimethylammoniumchlorid, Sojaalkyltrimethylammoniumchlorid, Cocosalkyldimethylbenzylammoniumchlorid, Cocosalkyl-2,4-dichlorbenzyldimethylammonumchlorid, Stearyldimethylbenzylammoniumchlorid, Dicocosalkyldimethylammoniumchlorid sowie Ditalgfettalkyldimethylammoniumchlorid, und worin im Falle der allgemeinen Formel (3) R₆, R₇, R₈ und R₉ unabhängig voneinander Wasserstoffatome, geradkettige oder verzweigte Alkylgruppen von 1 bis 30 Kohlenstoffatomen, vorzugsweise von 1 bis 22 Kohlenstoffatomen, ein- oder mehrkernige cycloaliphatische Reste von 5 bis 12 Kohlenstoffatomen, wie beispielsweise Cyclopentyl, Cyclohexyl, Oxethylgruppen der allgemeinen Formel -(CH₂-CH₂-O)ₙ-R, worin n eine Zahl von 1 bis 10, bevorzugt von 1 bis 4, darstellt und R ein Wasserstoffatom oder eine Alkyl(C₁-C₄)-gruppe, Acylgruppe, wie beispielsweise die Acetyl-, Benzoyl- oder Naphthoylgruppe, darstellen, ferner ein- oder mehrkernige aromatische Reste, wie beispielsweise einen Phenyl-, 1-Naphthyl-, 2-Naphthyl-, Tolyl- oder Biphenylrest und/oder araliphatische Reste, wie beispielsweise den Benzylrest, bedeuten, wobei die aliphatischen, aromatischen und araliphatischen Reste durch Hydroxy-, Alkoxy(C₁-C₄)-, sekundäre oder tertiäre Aminogruppen, wie beispielsweise Monoalkyl(C₁-C₆)-amino- oder Dialkyl(C₁-C₆)-aminogruppen, ferner Säureamidgruppen, vorzugsweise aliphatische Säureamidgruppen, wie beispielsweise die Gruppe 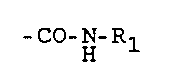
oder 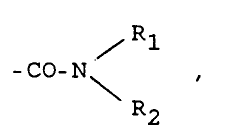
worin R₁ und R₂ Alkyl (C₁-C₃₀)-gruppen bedeuten, ferner Säureimidgruppen, wie beispielsweise die Phthalimid- oder Naphthalimidgruppe, wobei die Alkyl-, Cycloalkyl-, Aralkyl- und Arylreste für R₁ bis R₄ durch Fluor-, Chlor- oder Bromatome, die aliphatischen Reste insbesondere durch 1 bis 33 Fluoratome substituiert sein können, und in welcher X ein Phosphor-, Arsen- oder Antimonatom, vorzugsweise ein Phosphoratom bedeutet, wobei für den Fall, daß X ein Arsen- oder Antimonatom bedeutet, mindestens einer der Reste R₆ bis R₉ kein Wasserstoffatom darstellt und A⁻ das Äquivalent eines Anions, vorzugsweise eines anorganischen Anions, wie beispielsweise Halogenid, bevorzugt Bromid oder Chlorid, oder Sulfat, Hydrogensulfat, Hydroxid, Tetrafluoroborat, Hexafluorophosphat, Thiocycanat, Perchlorat, Hexafluoroarsenat oder Phosphat bedeutet.

An Einzelverbindungen seien beispielsweise genannt Tetraphenylphosphonium-chlorid, Benzyltriphenylphosphonium-chlorid, Methyltriphenylphosphonium-bromid, Tetrabutylphosphonium-bromid, Dodecyltributylphosphonium-bromid, Phthalimidomethyltributylphosphonium-bromid, Hexadecyltributylphosphonium-bromid sowie Octadecyltributylphosphonium-bromid.

Das erfindungsgemäße Verfahren ist sowohl auf Monoazopigmente als auch auf Dis-, Tris-, Tetrakis- und Polyazopigmente anwendbar.

Durch den erfindungsgemäßen Zusatz der salzartigen, kationischen Verbindungen bei der Kupplungsreaktion, der Verlackung (Metallsalzbildung) oder beim Fnish der Azopigmente werden die für die jeweils vorliegenden Azopigmente charakteristischen coloristischen Eigenschaften und Echtheitseigenschaften nicht oder unwesentlich nachteilig beeinflußt werden.

Die gemäß dem beanspruchten Verfahren triboelektrisch gezielt beeinflußten Pigmente werden in der Regel in einer Konzentration zwischen etwa 0,5 und etwa 15 Gewichtsprozent, vorzugsweise etwa 3 bis etwa 8 Gewichtsprozent, in das jeweilige Trägermaterial homogen eingearbeitet, wobei im Falle der elektrophotographischen Toner und Entwickler beispielsweise Styrol-, Styrolacrylat-, Styrolbutadien-, Polyester- und Epoxidharze, und im Falle der Pulverlacke Epoxid-, Polyester- und Acrylharze einzeln oder in Kombination typische Trägermaterialien sind, und die Trägermaterialien gegebenenfalls noch weitere Inhaltsstoffe, wie z.B. Wachse, Ladungssteuermittel, spezielle Härterkomponenten oder Pigmente enthalten können bzw. diese nach der Pigmenteinarbeitung noch zugesetzt werden können.

Beim erfindungsgemäßen Verfahren können die salzartigen, kationischen Verbindungen entweder vor oder bei der Kupplungsreaktion, bei der Verlackungsreaktion im Falle der verlackten Azopigmente oder bei einer Nachbehandlung (Finish) des Azopigmentes dem Pigment zugefügt werden, wobei die Konzentration der zugefügten kationischen Verbindung in der Regel zwischen 0,05 und 15 %, bevorzugt zwischen 1 und 8 %, liegt und wobei vor allem solche kationischen Verbindungen geeignet sind, die eine hohe Thermostabilität und eine Löslichkeit in Wasser bzw. in wäßrigem Medium von größer 10 g/l aufweisen.

Die allgemeinen Verfahren zur Herstellung von Azopigmenten sind in "Ullmanns Encyklopädie der Technischen Chemie" Band 18, S. 661-695, Verlag Chemie, Weinheim, 1979 beschrieben.

Ein weiterer Vorteil des erfindungsgemäßen Verfahrens besteht darin, daß die triboelektrisch aktiven Additive bei jedem beliebigen Schritt der Pigmentsynthese zugefügt werden können. Durch Auswahl von Zufügungszeitpunkt und Menge kann der triboelektrische Effekt des Pigmentes jeweils optimal eingestellt werden. Dadurch ist die Möglichkeit geschaffen worden, den triboelektrischen Effekt eines (verlackten) Azopigmentes gezielt zu beeinflussen und zudem diesen Effekt in kleinsten Schritten zu verändern, um ihn so für das jeweilige System zu optimieren. So besitzt, beispielsweise ein Testtoner mit 5 % Pigment Red 57:1 ohne Zusatz der speziellen, salzartigen, kationischen Verbindungen z.B. eine triboelektrische Aufladung von -9 µC/g (30 min Aktivierdauer) bzw. -50 µC/g/24 Stunden Aktivierdauer) [Beispiel 20].

Ein Zusatz von 2 % Tributylhexadecylphosphoniumbromid (TBHP) zu dem gleichen Pigment bei dessen Verlackungsreaktion (Metallsalzbildung) verändert die Aufladung eines vergleichbaren Testtoners auf -6 µC/g (30 min Aktivierdauer) bzw. -44 µC/g (24 Stunden Aktivierdauer [Beispiel 1]; ein Zusatz von 4 % THBP bei der Verlackungsreaktion verändert die Toneraufladung auf -3 µC/g (30 min Aktivierzeit) bzw. -38 µC/g (24 Stunden Aktivierzeit) [Beispiel 2], und ein Zusatz von 8 % TBHP bei der Verlackungsreaktion verändert die Toneraufladung auf +2 µC/g (30 min Aktivierdauer) bzw. -27 µC/g (24 Stunden Aktivierdauer) [Beispiel 3].
Setzt man dem gleichen Pigment 4 % TBHP statt bei der Verlackungsreaktion bei der Kupplungsreaktion zu seiner Herstellung zu, so verändert sich die Tonerladung auf +1 µC/g (30 min Aktivierdauer) bzw. -28 µC/g (24 Stunden Aktivierdauer) [Beispiel 7]; ein 4 % THBP-Zusatz zu dem Pigment bei der Pigmentnachbehandlung verändert die Toneraufladung auf ± 0 µC/g (30 min Aktivierdauer) bzw. -28 µC/g (24 Stunden Aktivierdauer) [Beispiel 11].
Ebenso geeignet zur gezielten Beeinflussung des triboelektrischen Effektes von Azopigment ist der Zusatz von Ammonium- und Immoniumsalzen zu den Pigmenten.

Durch die gezielte Beeinflussung des triboelektrischen Effektes der Pigmente kann gegebenenfalls auch der Verzicht des Zusatzes eines gesonderten Ladungssteuermittels ermöglicht werden. Dadurch werden die Probleme, die bei Zusatz von gesonderten Ladungssteuermitteln auftreten können, wie unerwünschte Beeinflussung des Farbtones, inhomogene Verteilung des Steuermittels im Toner oder allmähliches Auswandern des Steuermittels aus dem Toner, grundsätzlich vermieden.

Die nach dem erfindungsgemäßen Verfahren gezielt triboelektrisch beeinflußten Pigmente werden in an sich bekannter Weise in das Trägermaterial homogen eingearbeitet, beispielsweise durch Mischen und Extrudieren oder Einkneten. Die Pigmente können entweder als getrocknete und gemahlene Pulver, als Dispersionen, Preßkuchen oder Masterbatches oder in sonstiger geeigneter Form zugegeben werden. Ebenso können die Pigmente auch grundsätzlich schon bei der Herstellung der jeweiligen Trägermaterialien (Harze) zugegeben werden, d.h. im Verlauf von deren Polymerisation oder Polykondensation.

Die Höhe der elektrostatischen Aufladung der elektrophotographischen Toner, in welchen die nach dem erfindungsgemäß beanspruchten Verfahren triboelektrisch gezielt beeinflußten Pigmente homogen eingearbeitet wurden, wurde an Standardsystemen unter gleichen Bedingungen (wie gleiche Dispergierzeiten, gleiche Teilchengrößenverteilung, gleiche Teilchenform) bei 23 °C und 50 % relativer Luftfeuchtigkeit gemessen. Die Aktivierung des Toners in einem Zweikomponentenentwickler erfolgt durch Verwirbelung des Toners mit einem Carrier (3 Teile Toner auf 97 Teile Carrier) auf einer Rollbank (150 Umdrehungen pro Minute).

Bei der Bestimmung des Q/M-Wertes ist die Teilchengröße von großem Einfluß. Es wurde daher streng darauf geachtet, daß die bei den Sichtungen erhaltenen und in den nachstehenden Beispielen aufgeführten Tonerproben bezüglich der Teilchengrößenverteilung einheitlich waren.

Die nachstehenden Beispiele dienen zur Erläuterung der Erfindung, ohne sie darauf zu beschränken. Die angegebenen Teile bedeuten Gewichtsteile.

### Beispiel 1

5 Teile C.I. Pigment Red 57:1, welchem bei der Kupplungsreaktion 2 % Tributylhexadecylphosphoniumbromid (TBHP) zugesetzt worden waren (zur Pigmentsynthese siehe weiter unten), wurden mittels eines Kneters der Firma Werner & Pfleiderer (Stuttgart) 45 Minuten in 95 Teilen Tonerbindemittel (® Dialec S 309 der Firma Diamond Shamrock (Styrol-Methacryl-Copolymer)) dispergiert. Anschließend wurde auf der Laboruniversalmühle 100 LU (Firma Alpine, Augsburg) gemahlen und dann auf dem Zentrifugalsichter 100 MZR (Firma Alpine) klassifiziert.

Die gewünschte Teilchenfraktion wurde mit einem Carrier aus mit Styrol-Methacrylat 90:10 beschichteten Magnetit-Teilchen der Größe 50 bis 200 µm des Typs 90 µm Xerographic Carrier der Firma Materials Inc. aktiviert.

Die Messung erfolgt an einem üblichen Q/M-Meßstand (vgl. hierzu J.H. Dessauer, H.E. Clark, "Xerography and related Processes", Focal Press, N.Y. 1965, Seite 289). Durch Verwenden eines Siebes mit einer Maschenweite von 25 µm (508 Mesh per inch), Fa. Gebrüder Kufferath, Düren, wurde sichergestellt, daß bei den Tonerausblasungen kein Carrier mitgerissen werden kann.

In Abhängigkeit von der Aktivierdauer wurden folgende Q/M-Werte [µC/g] gemessen:

| Aktivierdauer | [µC/g] |
|---|---|
| 30 min | -6 |
| 2 Stunden | -34 |
| 24 Stunden | -44 |

### Pigmentsynthese

37,4 Teile 4-Aminotoluol-3-sulfonsäure wurden in 500 Teilen Wasser und 26,1 Teilen Natronlauge 33 %ig gelöst. Nach Zugabe von 4,5 Teilen eines Kupplungshilfsmittels auf Basis modifizierter Novolak-Oxalkylate, hergestellt entsprechend Europäischer Patentschrift Nr. 0 065 751, Beispiel 3.4., wird nach Abkühlung mit Eis auf 0 °C 56 Teile Salzsäure 31 %ig zugesetzt und dann bei 0 bis 5 °C mit 36,4 Teilen Natriumnitritlösung 38 %ig diazotiert.
Ferner wurden 39 Teile β-Oxynaphthoesäure in 1000 Teilen Wasser und 70 Teilen Natronlauge 33 %ig gelöst. In diese Lösung gibt man innerhalb von 30 Minuten die Diazosuspension. Nach Zugabe einer Lösung von 20 Teilen disproportionierten Kolophoniums in 200 Teilen Wasser und 8 Teilen Natronlauge 33 %ig und einer Lösung von 2,25 Teilen Tributylhexadecylphosphoniumbromid (TBHP) in 25 Teilen Wasser wird der pH-Wert der Suspension mit verdünnter Salzsäure auf pH 9,0 eingestellt. Zur Verlackung wird dann eine Lösung von 35 Teilen Calciumchlorid in 100 Teilen Wasser zugetropft. Es wird dann noch auf 80-85 °C aufgeheizt, 30 Minuten bei dieser Temperatur gerührt, abgesaugt, mit Wasser gewaschen und bei 80 °C getrocknet. Erhalten wurden 112 Teile eines roten Farblacks.

### Beispiel 2

5 Teile C.I. Pigment Red 57:1, welchem bei der Verlackungsreaktion 4 % TBHP zugesetzt worden waren (zur Pigmentsynthese siehe weiter unten), wurden, wie in Beispiel 1 beschrieben, in einen Toner eingearbeitet. In Abhängigkeit von der Aktivierdauer wurden folgende Q/M-Werte [µC/g] gemessen:

| Aktivierdauer | [µC/g] |
|---|---|
| 30 min | -3 |
| 2 Stunden | -25 |
| 24 Stunden | -38 |

### Pigmentsynthese:

Das Pigment wurde, wie in Beispiel 1 beschrieben, synthetisiert, wobei statt 2,25 Teilen TBHP 4,5 Teile TBHP eingesetzt wurden. Erhalten wurden 114 Teile eines roten Farblacks.

### Beispiel 3

5 Teile C.I. Pigment Red 57:1, welchem bei der Verlackungsreaktion 8 % TBHP zugesetzt worden waren (zur Pigmentsynthese siehe weiter unten), wurden, wie in Beispiel 1 beschrieben, in einen Toner eingearbeitet. In Abhängigkeit von der Aktivierdauer wurden folgende Q/M-Werte [µC/g] gemessen:

| Aktivierdauer | [µC/g] |
|---|---|
| 30 min | +2 |
| 2 Stunden | -12 |
| 24 Stunden | -27 |

### Pigmentsynthese:

Das Pigment wurde, wie in Beispiel 1 beschrieben, synthetisiert, wobei statt 2,25 Teilen TBHP 9 Teile TBHP eingesetzt wurden. Erhalten wurden 118 Teile eines roten Farblacks.

### Beispiel 4

5 Teile C.I. Pigment Red 57:1, welchem bei der Verlackungsreaktion 2 % TBHP zugesetzt worden waren (zur Pigmentsynthese siehe weiter unten), wurden, wie in Beispiel 1 beschrieben, in einen Toner eingearbeitet. In Abhängigkeit von der Aktivierdauer wurden folgende Q/M-Werte [µC/g] gemessen:

| Aktivierdauer | [µC/g] |
|---|---|
| 30 min | -6 |
| 2 Stunden | -28 |
| 24 Stunden | -46 |

### Pigmentsynthese:

Das Pigment wurde, wie in Beispiel 1 beschrieben, jedoch ohne Zugabe des Kupplungshilfmittels, synthetisiert. Erhalten wurden 108 Teile eines roten Farblacks.

### Beispiel 5

5 Teile C.I. Pigment Red 57:1, welchem bei der Verlackungsreaktion 4 % TBHP zugesetzt worden waren (zur Pigmentsynthese siehe weiter unten), wurden, wie in Beispiel 1 beschrieben, in einen Toner eingearbeitet. In Abhängigkeit von der Aktivierdauer wurden folgende Q/M-Werte [µC/g] gemessen:

| Aktivierdauer | [µC/g] |
|---|---|
| 30 min | +2 |
| 2 Stunden | -21 |
| 24 Stunden | -31 |

### Pigmentsynthese:

Das Pigment wurde, wie in Beispiel 2 beschrieben, jedoch ohne Zusatz des Kupplungshilfsmittels, synthetisiert. Erhalten wurden 110 Teile eines roten Farblacks.

### Beispiel 6

5 Teile C.I. Pigment Red 57:1, welchem bei der Verlackungsreaktion 8 % TBHP zugesetzt worden waren (zur Pigmentsynthese siehe weiter unten), wurden, wie in Beispiel 1 beschrieben, in einen Toner eingearbeitet. In Abhängigkeit von der Aktivierdauer wurden folgende Q/M-Werte [µC/g] gemessen:

| Aktivierdauer | [µC/g] |
|---|---|
| 30 min | +3 |
| 2 Stunden | -20 |
| 24 Stunden | -30 |

### Pigmentsynthese:

Das Pigment wurde, wie in Beispiel 3 beschrieben, jedoch ohne Zusatz des Kupplungshilfmittels, synthetisiert. Erhalten wurden 114 Teile eines roten Farblacks.

### Beispiel 7

5 Teile C.I. Pigment Red 57:1, bei dessen Synthese vor der Kupplungsreaktion 4 % TBHP zugesetzt worden waren (zur Pigmentsynthese siehe weiter unten), wurden, wie in Beispiel 1 beschrieben, in einen Toner eingearbeitet. In Abhängigkeit von der Aktivierdauer wurden folgende Q/M-Werte [µC/g] gemessen:

| Aktivierdauer | [µC/g] |
|---|---|
| 30 min | +1 |
| 2 Stunden | -24 |
| 24 Stunden | -28 |

### Pigmentsynthese

37,4 Teile 4-Aminotoluol-3-sulfonsäure wurden in 500 Teilen Wasser und 26,1 Teilen Natronlauge 33 %ig gelöst. Nach Zugabe von 4,5 Teilen eines Kupplungsmittels auf Basis von modifizierten Novolak-Oxalkylaten, hergestellt entsprechend der Europäischen Patentschrift Nr. 0 065 751, Beispiel 3.4., wurden nach Abkühlung mit Eis auf 0 °C 56 Teile Salzsäure 31 %ig zugesetzt. Dann wurden bei 0 bis 5 °C mit 36,4 Teilen Natriumnitritlösung 38 %ig diazotiert. Ferner wurden 39 Teile β-Oxynaphthoesäure in 1000 Teilen Wasser und 70 Teilen Natronlauge 33 %ig gelöst. Zu dieser Lösung wurde innerhalb von 30 Minuten die Diazosuspension, der zuvor eine Lösung von 4,5 Teilen TBHP in 25 Teilen Wasser zugefügt waren, zugegeben. Nach Zugabe einer Lösung von 20 Teilen disproportionierten Kolophoniums in 200 Teilen Wasser und 8 Teilen Natronlauge 33 %ig wurde der pH-Wert der Suspension mit verdünnter Salzsäure auf pH 9,0 eingestellt. Zur Verlackung wurde dann eine Lösung von 35 Teilen Calciumchlorid in 100 Teilen Wasser zugetropft. Anschließend wurde auf 80-85 °C aufgeheizt, nach 30 Minuten bei dieser Temperatur gerührt, abgesaugt, mit Wasser gewaschen und schließlich bei 80 °C getrocknet. Man erhält 114 Teile eines roten Farblacks.

### Beispiel 8

5 Teile C.I. Pigment Red 57:1, bei dessen Synthese vor der Kupplungsreaktion 8 % TBHP zugesetzt wurden (zur Pigmentsynthese siehe weiter unten), wurden, wie in Beispiel 1 beschrieben, in einen Toner eingearbeitet. In Abhängigkeit von der Aktivierdauer wurden folgende Q/M-Werte [µC/g] gemessen.

| Aktivierdauer | [µC/g] |
|---|---|
| 30 min | +1 |
| 2 Stunden | -16 |
| 24 Stunden | -28 |

### Pigmentsynthese:

Das Pigment wurde, wie in Beispiel 7 beschrieben, synthetisiert, wobei statt 4,5 Teilen TBHP 9 Teile TBHP eingesetzt wurden. Erhalten wurden 118 Teile eines roten Farblacks.

### Beispiel 9

5 Teile C.I. Pigment Red 57:1, bei dessen Synthese vor der Kupplungsreaktion 4 % TBHP zugesetzt worden waren, (zur Pigmentsynthese siehe weiter unten), wurden, wie in Beispiel 1 beschrieben, in einen Toner eingearbeitet. In Abhängigkeit von der Aktivierdauer wurden folgende Q/M-Werte [µC/g] gemessen:

| Aktivierdauer | [µC/g] |
|---|---|
| 30 min | -8 |
| 2 Stunden | -30 |
| 24 Stunden | -30 |

### Pigmentsynthese:

Das Pigment wurde, wie in Beispiel 7 beschrieben, synthetisiert, jedoch ohne Zugabe des Kolophoniumharzes. Erhalten wurden 93 Teile eines roten Farblacks.

### Beispiel 10

5 Teile C.I. Pigment Red 57:1, bei dessen Synthese vor der Kupplungsreaktion 8 % TBHP zugesetzt worden waren (zur Pigmentsynthese siehe weiter unten), wurden, wie in Beispiel 1 beschrieben, in einen Toner eingearbeitet. In Abhängigkeit von der Aktivierdauer wurden folgende Q/M-Werte [µC/g] gemessen:

| Aktivierdauer | [µC/g] |
|---|---|
| 30 min | -1 |
| 2 Stunden | -19 |
| 24 Stunden | -26 |

### Pigmentsynthese:

Das Pigment wurde, wie in Beispiel 9 beschrieben, synthetisiert, wobei statt 4,5 Teile TBHP 9 Teile TBHP eingesetzt wurden. Erhalten wurden 98 Teile eines roten Farblacks.

### Beispiel 11

5 Teile C.I. Pigment Red 57:1, bei dessen Nachbehandlung 4 % TBHP zugesetzt worden waren (zur Pigmentsynthese siehe weiter unten), wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | ±0 |
| 2 Stunden | -17 |
| 24 Stunden | -28 |

### Pigmentsynthese:

37,4 Teile 4-Aminotoluol-3-sulfonsäure wurden in 500 Teilen Wasser und 26,1 Teilen Natronlauge 33 %ig gelöst. Nach Zugabe von 4,5 Teilen eines Kupplungshilfsmittels auf Basis von modifizierten Novolak-Oxalkylaten, hergestellt entsprechend der Europäischen Patentschrift Nr. 0 065 751, Beispiel 3.4., wurden nach Abkühlung mit Eis auf 0 °C 56 Teile Salzsäure 31 %ig zugesetzt. Dann wurden bei 0 bis 5 °C mit 36,4 Teilen Natriumnitritlösung 38 %ig diazotiert.
Ferner wurden 39 Teile β-Oxynaphthoesäure in 1000 Teilen Wasser und 70 Teilen Natronlauge 33 %ig gelöst. In diese Lösung wurde innerhalb von 30 Minuten die Diazosuspension gegeben. Nach Zugabe einer Lösung von 20 Teilen disproportioniertem Kolophonium in 200 Teilen Wasser und 8 Teilen Natronlauge 33 %ig wurde der pH-Wert der Suspension mit verdünnter Salzsäure auf pH 9,0 eingestellt. Zur Verlackung wurde dann eine Lösung von 35 Teilen Calciumchlorid in 100 Teilen Wasser nach Zusatz einer Lösung von 2,25 Teilen TBHP in 25 Teilen Wasser zugetropft. Anschließend wurde auf 80-85 °C aufgeheizt, dann 30 Minuten bei dieser Temperatur gerührt, abgesaugt, mit Wasser gewaschen und schließlich bei 80 °C getrocknet. Erhalten wurden 114 Teile eines roten Farblacks.

### Beispiel 12

5 Teile C.I. Pigment Red 57:1, bei dessen Nachbehandlung 8 % TBHP zugesetzt wurden (zur Pigmentsynthese siehe weiter unten), wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | +3 |
| 2 Stunden | -12 |
| 24 Stunden | -27 |

### Pigmentsynthese:

Das Pigment wurde, wie in Beispiel 11 beschrieben, synthetisiert, wobei statt 4,5 Teile TBHP 9 Teile TBHP eingesetzt wurden. Erhalten wurden 118 Teile eines roten Farblacks.

### Beispiel 13

5 Teile C.I. Pigment Red 57:1, bei dessen Nachbehandlung 4 % TBHP zugesetzt worden waren (zur Pigmentsynthese siehe weiter unten), wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | -10 |
| 2 Stunden | -27 |
| 24 Stunden | -32 |

### Pigmentsynthese:

Das Pigment wurde, wie in Beispiel 11 beschrieben, jedoch ohne Zugabe des Kolophoniumharzes, synthetisiert. Erhalten wurden 93 Teile eines roten Farblacks.

### Beispiel 14

5 Teile C.I. Pigment Red 57:1 bei dessen Nachbehandlung 8 % TBHP zugesetzt worden waren (zur Pigmentsynthese siehe weiter unten), wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | -3 |
| 2 Stunden | -19 |
| 24 Stunden | -24 |

### Pigmentsynthese:

Das Pigment wurde, wie in Beispiel 12 beschrieben, jedoch ohne Zugabe des Kolophoniumharzes, synthetisiert. Erhalten wurden 98 Teile eines roten Farblacks.

### Beispiel 15

5 Teile C.I. Pigment Red 57:1 welchem bei der Verlackungsreaktion 4 % Cocosalkyldimethylbenzylammoniumchlorid (CDBA) zugesetzt worden waren (zur Pigmentsynthese siehe weiter unten), wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | -5 |
| 2 Stunden | -27 |
| 24 Stunden | -37 |

### Pigmentsynthese:

Das Pigment wurde, wie in Beispiel 2 beschrieben, synthetisiert, wobei statt 4,5 Teilen TBHP 4,5 Teile CDBA eingesetzt wurden. Erhalten wurden 114 Teile eines roten Farblacks.

### Beispiel 16

5 Teile C.I. Pigment Red 57:1, welchem bei der Verlackungsreaktion 8 % CDBA zugesetzt worden waren (zur Pigmentsynthese siehe weiter unten), wurden, wie in Beispiel 1 beschrieben, in einen Toner eingearbeitet. In Abhängigkeit von der Aktivierdauer wurden folgende Q/M-Werte [µC/g] gemessen:

| Aktivierdauer | [µC/g] |
|---|---|
| 30 min | ±0 |
| 2 Stunden | -15 |
| 24 Stunden | -22 |

### Pigmentsynthese:

Das Pigment wurde, wie in Beispiel 15 beschrieben, synthetisiert, wobei statt 4,5 Teile CDBA 9 Teile CDBA eingesetzt wurden. Erhalten wurden 118 Teile eines roten Farblacks.

### Beispiel 17

5 Teile C.I. Pigment Red 57:1 welchem bei der Verlackungsreaktion 4 % (CDBA) zugesetzt worden waren (zur Pigmentsynthese siehe weiter unten), wurden, wie in Beispiel 1 beschrieben, in einen Toner eingearbeitet. In Abhängigkeit von der Aktivierdauer wurden folgende Q/M-Werte [µC/g] gemessen:

| Aktivierdauer | [µC/g] |
|---|---|
| 30 min | -13 |
| 2 Stunden | -34 |
| 24 Stunden | -40 |

### Pigmentsynthese:

Das Pigment wurde, wie in Beispiel 15 beschrieben, jedoch ohne Zugabe des Kolophoniumharzes, synthetisiert. Erhalten wurden 93 Teile eines roten Farblacks.

### Beispiel 18

5 Teile C.I. Pigment Red 57:1, welchem bei der Verlackungsreaktion 8 % CDBA zugesetzt worden waren (zur Pigmentsynthese siehe weiter unten), wurden, wie in Beispiel 1 beschrieben, in einen Toner eingearbeitet. In Abhängigkeit von der Aktivierdauer wurden folgende Q/M-Werte [µC/g] gemessen:

| Aktivierdauer | [µC/g] |
|---|---|
| 30 min | -9 |
| 2 Stunden | -20 |
| 24 Stunden | -28 |

### Pigmentsynthese:

Das Pigment wurde, wie in Beispiel 17 beschrieben, synthetisiert, wobei statt 4,5 Teile CDBA 9 Teile CDBA eingesetzt wurden. Erhalten wurden 98 Teile eines roten Farblacks.

### Beispiel 19

5 Teile C.I. Pigment Red 57:1 welchem bei der Verlackungsreaktion 8 % Distearyldimethylammoniumchlorid (DDA) zugesetzt worden waren (zur Pigmentsynthese siehe weiter unten), wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | -11 |
| 2 Stunden | -31 |
| 24 Stunden | -44 |

### Pigmentsynthese:

Das Pigment wurde, wie in Beispiel 3 beschrieben, synthetisiert, wobei statt 9 Teile TBHP 9 Teile DDA zugesetzt wurden. Erhalten wurden 118 Teile eines roten Farblacks.

### Beispiel 20 (Vergleichsbeispiel)

5 Teile eines triboelektrisch nicht gezielt beeinflußten C.I. Pigment Red 57:1 (zur Pigmentsynthese siehe weiter unten), wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | -9 |
| 2 Stunden | -36 |
| 24 Stunden | -50 |

### Pigmentsynthese:

Das Pigment wurde, wie in Beispiel 1 beschrieben, jedoch ohne Zusatz von TBHP, synthetisiert. Erhalten wurden 110 Teile eines roten Farblacks.

### Beispiel 21 (Vergleichsbeispiel)

5 Teile eines triboelektrisch nicht gezielt beeinflußten C.I. Pigment Red 57:1, wurden, wie in Beispiel 1 beschrieben, in einen Toner eingearbeitet. In Abhängigkeit von der Aktivierdauer wurden folgende Q/M-Werte [µC/g] gemessen:

| Aktivierdauer | [µC/g] |
|---|---|
| 30 min | -20 |
| 2 Stunden | -44 |
| 24 Stunden | -52 |

### Pigmentsynthese:

Das Pigment wurde, wie in Beispiel 1 beschrieben, jedoch ohne Zusatz von TBHP und ohne Zusatz des Kollophoniumharzes synthetisiert. Erhalten wurden 89 Teile eines roten Farblacks.

### Beispiel 22

5 Teile C.I. Pigment Red 48:2, welchem bei der Verlackungsreaktion 4 % TBHP zugesetzt worden waren (zur Pigmentsynthese siehe weiter unten), wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | +4 |
| 2 Stunden | -6 |
| 24 Stunden | -13 |

### Pigmentsynthese:

59 Teile 2-Amino-4-chlor-5-methylbenzolsulfonsäure wurden in 600 Teilen Wasser in 34,8 Teilen Natronlauge 33 %ig bei 75 °C gelöst. Nach Zugabe von 6 Teilen eines Kupplungshilfsmittels auf Basis von modifizierten Novolak-Oxalkylaten, hergestellt entsprechend EP-Nr. 0 065 751, Beispiel 3.4., wurden 75 Teile Salzsäure 31 %ig zugesetzt. Nach Abkühlung mit Eis auf 0 °C wurde mit 48,5 Teilen Natriumnitritlösung 38 %ig diazotiert. Ferner wurden 52 Teile β-Oxynaphthoesäure in 1300 Teilen Wasser und 108 Teilen Natronlauge 33 %ig gelöst. In diese Lösung wurde innerhalb von 30 Minuten die Diazosuspension gegeben. Nach Zugabe einer Lösung von 6 Teilen Tributylhexadecylphosphoniumbromid in 60 Teilen Wasser und einer Lösung von 20 Teilen disproportioniertem Kolophonium in 200 Teilen Wasser und 8 Teilen Natronlauge wurde zur Verlackung eine Lösung von 35 Teilen Calciumchlorid in 100 Teilen Wasser zugetropft. Anschließend wurde auf 80 °C aufgeheizt, dann abfiltriert, mit Wasser gewaschen und bei 80 °C getrocknet.
Erhalten wurden 139 Teile eines roten Farblacks.

### Beispiel 23 (Vergleichsbeispiel)

5 Teile eines triboelektrisch nicht gezielt beeinflußten C.I. Pigment Red 48:2 wurden, wie in Beispiel 1 beschrieben, in einen Toner eingearbeitet.
In Abhängigkeit von der Aktivierdauer wurden folgende Q/M-Werte [µC/g^{80♀}] gemessen:

| Aktivierdauer | [µC/g] |
|---|---|
| 30 min | +1 |
| 2 Stunden | -9 |
| 24 Stunden | -16 |

### Pigmentsynthese:

Das Pigment wurde, wie in Beispiel 22 beschrieben, synthetisiert, jedoch ohne Zusatz von TBHP. Erhalten wurden 133 Teile eines roten Farblacks.

### Beispiel 24

5 Teile eines C.I. Pigment Red 48:4, welchem bei der Verlackungsreaktion 2 % TBHP zugesetzt worden waren (zur Pigmentsynthese siehe weiter unten), wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | -4 |
| 2 Stunden | -15 |
| 24 Stunden | -18 |

### Pigmentsynthese:

59 Teile 2-Amino-4-chlor-5-methylbenzolsulfonsäure wurden in 800 Teilen Wasser und 34,8 Teilen Natronlauge 33 %ig bei 70 bis 75 °C gelöst und nach Abkühlen mit Eis auf 30 °C mit 48,5 Teilen Natriumnitritlösung versetzt. Zur Diazotierung ließ man diese Lösung in eine Lösung aus 78,5 Teilen Salzsäure 31 %ig, 200 Teilen Wasser und 800 Teilen Eis bei -5 bis +5 °C einlaufen.
Ferner wurden 52 Teile β-Oxynaphthoesäure in 1120 Teilen Wasser und 108 Teilen Natronlauge 33 % gelöst und nach Zugabe von 90 Teilen Soda mit Eis auf 5 °C abgekühlt. In diese Lösung ließ man dann innerhalb 1 Stunde die Diazosuspension zulaufen. Es wurde noch bis zur Beendigung der Kupplungsreaktion gerührt, dann auf 80 °C geheizt und 1 Stunde bei 80 °C gerührt. Schließlich wurde filtriert und gewaschen.
Der Preßkuchen wurde in 8000 Teilen Wasser suspendiert und nach Zugabe von 12 Teilen Tributyl-hexadecylphosphoniumbromid zur Verlackung mit 66,6 Teilen Mangansulfat versetzt. Dann wurde auf 98 bis 100 °C geheizt, 15 Minuten bei dieser Temperatur verrührt, filtriert und gewaschen. Das Produkt wurde bei 70 °C getrocknet.
Es wurden 144 Teile eines roten Farblacks erhalten.

### Beispiel 25

5 Teile eines triboelektrisch nicht gezielt beeinflußten C.I. Pigment Red 48:4 wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | -9 |
| 2 Stunden | -17 |
| 24 Stunden | -23 |

### Pigmentsynthese:

Das Pigment wurde, wie in Beispiel 24 beschrieben, synthetisiert, jedoch ohne Zusatz von TBHP. Erhalten wurden 142 Teile eines roten Farblacks.

### Beispiel 26

5 Teile eines C.I. Pigment Red 53:1, welchem bei der Verlackungsreaktion 2 % TBHP zugesetzt worden waren (zur Pigmentsynthese siehe weiter unten), wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | -10 |
| 2 Stunden | -26 |
| 24 Stunden | -31 |

### Pigmentsynthese:

66,45 Teile 2-Amino-4-methyl-5-chlorbenzolsulfonsäure wurden in 700 Teilen Wasser und 45 Teilen Salzsäure 31 %ig angerührt und bei 20 bis 25 °C durch Zugabe von 54,5 Teilen Natriumnitritlösung diazotiert.
Ferner wurden 45 Teile β-Naphthol in 300 Teilen Wasser und 40,8 Teilen Natronlauge bei 20 bis 25 °C gelöst. diese Lösung ließ man dann innerhalb 1 Stunde zur Diazosuspension zulaufen. Nach beendeter Kupplungsreaktion wurden 3 Teile Tributyl-hexadecylphosphoniumbromid (THBP) zugegeben und anschließend 40 Teile Bariumchlorid krist. zugesetzt. Durch Anheizen auf 80 bis 85 °C wurde das Produkt verlackt. Es wurde noch 15 Minuten bei 80 bis 85 °C nachgerührt, abfiltriert, gewaschen und getrocknet.
Es wurden 133 Teile eines roten Farblacks erhalten.

### Beispiel 27 (Vergleichsbeispiel)

5 Teile eines triboelektrisch nicht gezielt beeinflußten C.I. Pigment Red 53:1 wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | -25 |
| 2 Stunden | -38 |
| 24 Stunden | -43 |

### Pigmentsynthese:

Das Pigment wurde, wie in Beispiel 26 beschrieben, synthetisiert, jedoch ohne Zusatz von TBHP. Erhalten wurden 130 Teile eines roten Farblacks.

### Beispiel 28

5 Teile C.I. Pigment Yellow 12, welchem bei der Kupplungsreaktion 4 % TBHP zugesetzt worden waren (zur Pigmentsynthese siehe weiter unten), wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | +9 |
| 2 Stunden | +2 |
| 24 Stunden | -3 |

### Pigmentsynthese:

50,6 Teile 3,3'-Dichlorbenzidin wurden mit 120 Teilen Salzsäure 31 %ig und 250 Teilen Wasser angerührt und in das 3,3'-Dichlorbenzidin-dihydrochlorid überführt. Dann wurde bei 0 bis 5 °C durch Zulauf von 72,7 Teilen einer 38 %igen Natriumnitritlösung in üblicher Weise tetrazotiert. die Tetrazoniumsalzlösung wurde mit 6 Teilen Kieselgur behandelt, anschließend filtriert und die Temperatur auf 10 °C und das Volumen auf 800 Teile eingestellt.

74 Teile Acetessiganilid wurden in 1600 Teilen Wasser angeschlämmt und durch Zugabe von 81 Teilen Natronlauge 33 %ig gelöst. Nach Zugabe von 6,2 Teilen Tributylhexadecylphosphoniumbromid (TBHP) wurde die Kupplungskomponente durch Zulauf von 46 Teilen Eisessig wieder ausgefällt und dann durch Zulauf der Tetrazolösung bei 20 bis 25 °C innerhalb 2 Stunden gekuppelt, wobei der pH-Wert durch gleichzeitigen Zulauf von 6 %iger Natronlauge bei pH 4,5 konstant gehalten wurde. Nach beendeter Kupplungsreaktion wurde noch 15 Minuten bei 90 °C nachbehandelt, abgesaugt, mit Wasser neutral und salzfrei gewaschen und bei 80 °C im Umluftschrank getrocknet. Erhalten wurden 133 Teile eines gelben Pigmentes.

### Beispiel 29 (Vergleichsbeispiel)

5 Teile eines triboelektrisch nicht gezielt beeinflußten C.I. Pigment Yellow 12 wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | -9 |
| 2 Stunden | -22 |
| 24 Stunden | -39 |

### Pigmentsynthese:

Das Pigment wurde, wie in Beispiel 28 beschrieben, synthetisiert, jedoch ohne Zusatz von TBHP. Erhalten wurden 127 Teile eines gelben Pigmentes.

### Beispiel 30

5 Teile C.I. Pigment Yellow 14, welchem bei der Kupplungsreaktion 5 % TBHP zugesetzt worden waren (zur Pigmentsynthese siehe weiter unten), wurden, wie in Beispiel 1 beschrieben, in einen Toner eingearbeitet. In Abhängigkeit von der Aktivierdauer wurden folgende Q/M-Werte [µC/g] gemessen:

| Aktivierdauer | [µC/g] |
|---|---|
| 30 min | +3 |
| 2 Stunden | ±0 |
| 24 Stunden | -1 |

### Pigmentsynthese:

78 Teile 2,4,5-Trichloranilin wurden in Gegenwart von 0,6 Teilen sekundärem Alkylsulfonat (®Hostaperm SAS 30) wäßrig kolloid vermahlen. Nach Zugabe von 450 Teilen Salzsäure 31 %ig wurde 5 Stunden nachgerührt und dann rasch bei 0 bis 10 °C durch Zulauf von 72,5 Teilen Natriumnitritlösung 38 %ig diazotiert. Nach 1 Stunde Nachrührzeit mit Nitritüberschuß wurde dieser dann mit etwas Amidosulfonsäure zerstört. Zum Klären wurden noch 5 Teile Kieselgur zugegeben.
110 Teile Naphtol AS-D wurden in 350 Teilen Wasser und 76 Teilen Natronlauge 33 %ig bei 75 bis 80 °C gelöst. Die Lösung wurde mit Eis und Wasser auf 15 °C abgekühlt und das Volumen auf 1,7 l eingestellt. Nach Zugabe von 10 Teilen Tributylhexadecylphosphoniumbromid wurde das Naphtol AS-D durch raschen Zulauf von 86 Teilen Salzsäure 31 %ig gefällt. Die Fällung wurde auf 30 °C angeheizt. Dann ließ man die Diazoniumsalzlösung in 1 Stunde bei 30 °C zulaufen. Es wurde 30 Minuten nachgerührt, dann langsam auf 70 °C angeheizt und ca. 2 Stunden bei 65 bis 70 °C nachgerührt bis kein Überschuß an Diazoniumverbindung mehr vorhanden war. Anschließend wurde abfiltriert, mit Wasser neutral und salzfrei gewaschen und bei 80 °C im Umluftschrank getrocknet. Erhalten wurden 192 Teile eines roten Pigmentes.

### Beispiel 31 (Vergleichsbeispiel)

5 Teile eines triboelektrisch nicht gezielt beeinflußten C.I. Pigment Red wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | -9 |
| 2 Stunden | -17 |
| 24 Stunden | -29 |

### Pigmentsynthese:

Das Pigment wurde, wie in Beispiel 30 beschrieben, synthetisiert, jedoch ohne Zusatz von TBHP. Erhalten wurden 182 Teile eines roten Pigmentes.

### Beispiel 32

5 Teile C.I. Pigment Yellow 17, welchem vor der Kupplungsreaktion 4 % TBHP zugesetzt worden waren (zur Pigmentsynthese siehe weiter unten), wurden, wie in Beispiel 1 beschrieben, in einen Toner eingearbeitet. In Abhängigkeit von der Aktivierdauer wurden folgende Q/M-Werte [µC/g] gemessen:

| Aktivierdauer | [µC/g] |
|---|---|
| 30 min | +23 |
| 2 Stunden | +14 |
| 24 Stunden | +2 |

### Pigmentsynthese:

Die Herstellung der Tetrazoniumsalzlösung erfolgte analog Beispiel 28 (C.I. Pigment Yellow 12).
86 Teile Acetessig-o-anisidid wurden in 1000 Teilen Wasser angeschlämmt und durch Zugabe von 108 Teilen Natronlauge 33 %ig gelöst. Nach Zugabe einer Lösung von 10 Teilen Harzseife in 30 Teilen Wasser und 6,9 Teilen Tributylhexadecylphosphoniumbromid wurde bei 10 °C die Kupplungskomponente durch Zulauf von 56,6 Teilen Eisessig ausgefällt. Dan wurde in 2 Stunden bei 20 bis 25 °C durch Zulauf der Tetrazonium-Salzlösung gekuppelt, wobei der pH-Wert von pH 6,4 auf pH 3,8 abfiel. Es wurde dann noch auf 90 °C angeheizt, 30 Minuten bei 90 °C nachgerührt, abgesaugt, mit Wasser neutral und salzfrei gewaschen und bei 70 °C im Umluftschrank getrocknet.
Erhalten wurden 150 Teile eines gelben Pigmentes.

### Beispiel 33 (Vergleichsbeispiel)

5 Teile eines triboelektrisch nicht gezielt beeinflußten C.I. Pigment Yellow 17 wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | -4 |
| 2 Stunden | -15 |
| 24 Stunden | -26 |

### Pigmentsynthese:

Das Pigment wurde, wie in Beispiel 32 beschrieben, synthetisiert, jedoch ohne Zusatz von TBHP. Erhalten wurden 143 Teile eines gelben Pigmentes.

### Beispiel 34

5 Teile C.I. Pigment Yellow 81, welchem vor der Kupplungsreaktion 4 % TBHP zugesetzt worden waren (zur Pigmentsynthese siehe weiter unten), wurden, wie in Beispiel 1 beschrieben, in einen Toner eingearbeitet. In Abhängigkeit von der Aktivierdauer wurden folgende Q/M-Werte [µC/g] gemessen:

| Aktivierdauer | [µC/g] |
|---|---|
| 30 min | +8 |
| 2 Stunden | +1 |
| 24 Stunden | -1 |

### Pigmentsynthese:

80,5 Teile Tetrachlorbenzidin wurden mit 235 Teilen Salzsäure 31 %ig angerührt und bei 0 bis 10 °C durch Zulauf von 90,8 Teilen Natriumnitritlösung 38 %ig rasch tetrazotiert.
106 Teile Acetessig-m-xylidid wurden in 2000 Teilen Wasser und 67,5 Teilen Natronlauge 33 %ig gelöst und nach Zugabe von 9 Teilen Tributylhexadecylphosphoniumbromid (TBHP) bei 10 °C mit 52 Teilen Eisessig wieder ausgefällt. Dann wurde in 1 1/2 Stunden bei 15 bis 20 °C durch Zulauf der Tetrazoniumsalzlösung gekuppelt, wobei der pH-Wert durch Zulauf einer 15 %igen Natriumacetatlösung bei pH 3,9 bis 4,0 konstant gehalten wurde. Es wurde 15 Minuten nachgerührt, dann auf 98 °C angeheizt, 30 Minuten bei 98 °C nachgerührt, abgekühlt auf 70 °C, abfiltriert, mit Wasser neutral und salzfrei gewaschen und im Umluftschrank bei 80 °C getrocknet.
Es wurden 192 Teile eines gelben Pigmentes erhalten.

### Beispiel 35 (Vergleichsbeispiel)

5 Teile eines triboelektrisch nicht gezielt beeinflußten C.I. Pigment Yellow 81 (zur Pigmentsythese siehe weiter unten) wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | -1 |
| 2 Stunden | -8 |
| 24 Stunden | -18 |

### Pigmentsynthese:

Das Pigment wurde, wie in Beispiel 34 beschrieben, synthetisiert, jedoch ohne Zusatz von TBHP. Erhalten wurden 183 Teile eines gelben Pigmentes.

### Beispiel 36

5 Teile C.I. Pigment Yellow 97, bei dessen Synthese vor der Kupplungsreaktion 4 % TBHP zugesetzt worden waren (zur Pigmentsynthese siehe weiter unten), wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | +5 |
| 2 Stunden | ±0 |
| 24 Stunden | ±0 |

### Pigmentsynthese:

102,7 Teile Chinonbasesulfanilid (2,5-Dimethoxy-4-phenylsulfamoyl-anilin) wurden mit 115,5 Teilen Salzsäure und 670 Teilen Wasser angerührt und bei 15 °C durch Zulauf von 59 Teilen Natriumnitritlösung 38 %ig diazotiert.
100 Teile Naphtol AS-IRG wurden in 500 Teilen Wasser und 54 Teilen Natronlauge 33 %ig gelöst. Nach Klärung ließ man die Lösung in eine 0 °C kalte Lösung aus 670 Teilen Wasser, 35 Teilen Eisessig und 9 Teilen Tributylhexadexylphosphoniumbromid (TBHP) einlaufen. Dann wurde bei 20 °C die Diazoniumsalzlösung zugefügt, wobei durch gleichzeitigen Zulauf von 6 %iger Natronlauge der pH-Wert bei pH 6,1 bis 6,2 konstant gehalten wurde. Die fertige Kupplung wurde dann mit 90 Teilen Natronlauge 33 %ig phenolphthaleinalkalisch gestellt, auf 98 °C angeheizt, 30 Minuten bei 98 °C nachgerührt und nach dem Abkühlen auf 70 °C filtriert, mit Wasser neutral und salzfrei gewaschen und bei 80 °C im Umluftschrank getrocknet.
Es wurden 198 Teile eines gelben Pigmentes erhalten.

### Beispiel 37 (Vergleichsbeispiel)

5 Teile eines triboelektrisch nicht gezielt beeinflußten C.I. Pigment Yellow 97 wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | -3 |
| 2 Stunden | -10 |
| 24 Stunden | -17 |

### Pigmentsynthese:

Das Pigment wurde, wie in Beispiel 36 beschrieben, synthetisiert, jedoch ohne Zusatz von TBHP. Erhalten wurden 189 Teile eines gelben Pigmentes.

### Beispiel 38

5 Teile eines gelben Azopigmentes, bei dessen Synthese vor der Kupplungsreaktion 4 % TBHP zugesetzt worden waren (zur Pigmentsynthese siehe weiter unten), wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | -6 |
| 2 Stunden | -6 |
| 24 Stunden | -6 |

### Pigmentsynthese:

76,5 Teile o-Nitranilin-p-sulfosäure wurden in 105 Teilen Wasser und 124 Teilen Salzsäure 31 %ig suspendiert und nach Abkühlung mit Eis auf 0 °C durch Zugabe von 64,8 Teilen Natriumnitritlösung diazotiert.
66 Teile Acetessiganilid wurden in 850 Teilen Wasser durch Zugabe von 55,5 Teilen Natronlauge 33 %ig gelöst und nach Zugabe von 6 Teilen Tributylhexadecylphosphoniumbromid mit. 31,5 Teilen Eisessig wieder ausgefällt. Zu dieser Fällung wurde dann rasch bei 12 bis 15 °C die Diazoniumsalzsuspension zugegeben und durch Einstellen des pH-Wertes mit 400 Teilen Sodalösung 10 %ig auf pH 6 die Kupplungsreaktion zu Ende gebracht.
Es wurde dann auf 80 °C angeheizt, 15 Minuten bei 80 °C nachgerührt, filtriert, gewaschen und bei 70 °C getrocknet. Es wurden 142 Teile eines gelben Pulvers der Formel 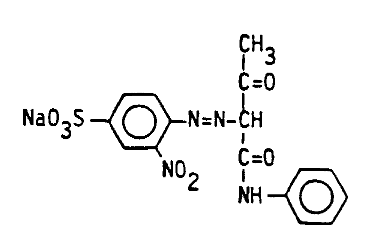
erhalten.

### Beispiel 39 (Vergleichsbeispiel)

5 Teile eines triboelektrisch nicht gezielt beeinflußten gelben Azopigmentes wurden, wie in Beispiel 1 beschrieben, in einen Toner eingearbeitet.
In Abhängigkeit von der Aktivierdauer wurden folgende Q/M-Werte [µC/g] gemessen:

| Aktivierdauer | [µC/g] |
|---|---|
| 30 min | -8 |
| 2 Stunden | -10 |
| 24 Stunden | -10 |

### Pigmentsynthese:

Das Pigment wurde, wie in Beispiel 37 beschrieben, synthetisiert, jedoch ohne Zusatz von TBHP. Erhalten wurden 140 Teile eines gelben Pigmentes.

## Patentansprüche

1. Verfahren zur gezielten Beeinflussung des triboelektrischen Effekts von Azopigmenten in elektrophotographischen Tonern oder Entwicklern oder in Pulvern zur Oberflächenbeschichtung, dadurch gekennzeichnet, daß den Azopigmenten bei der Kupplungsreaktion, bei der Verlackung oder beim Finish mindestens eine salzartige, kationische Verbindung der allgemeinen Formeln 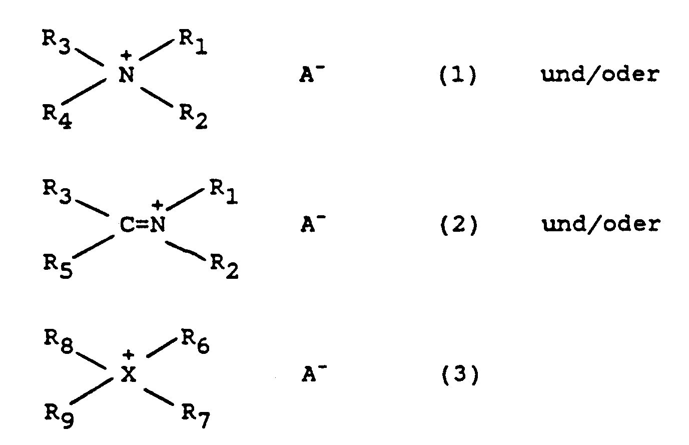 zugesetzt wird, worin im Falle der allgemeinen Formeln (1) und (2) R₁, R₂, R₃ und R₄ unabhängig voneinander Wasserstoffatome, geradkettige oder verzweigte Alkylgruppen von 1 bis 30 Kohlenstoffatomen, Oxethylgruppen der allgemeinen Formel -(CH₂-CH₂-O)ₙ-R, worin R ein Wasserstoffatom oder eine Alkyl(C₁-C₄)- oder Acylgruppe und n eine Zahl von 1 bis 10 bedeuten, ein- oder mehrkernige cycloaliphatische Reste von 5 bis 12 Kohlenstoffatomen, ein- oder mehrkernige aromatische oder araliphatische Reste darstellen, wobei die aliphatischen, araliphatischen und aromatischen Reste durch Hydroxy-, Alkoxy(C₁-C₄)-, primäre, sekundäre oder tertiäre Aminogruppen, Säureamidgruppen oder Fluor-, Chlor- oder Bromatome, substituiert sein können, R₅ ein Wasserstoff-, Fluor-, Chlor- oder Bromatom oder eine Alkyl(C₁-C₆)-, Alkoxy(C₁-C₆)- oder primäre Aminogruppe bedeutet, und A^{ϑ} das Äquivalent eines Anions darstellt, und wobei R₁ und R₃ Teil eines Ringsystems mit 5 bis 7 Kohlenstoffatomen sein können, das durch 1 oder 2 Heteroatome unterbrochen sein kann und 1 bis 3 Doppelbindungen enthalten kann, und worin im Falle der allgemeinen Formel (3) R₆, R₇, R₈ und R₉ unabhängig voneinander Wasserstoffatome, geradkettige oder verzweigte Alkylgruppen von 1 bis 30 Kohlenstoffatomen, ein- oder mehrkernige cycloaliphatische Reste von 5 bis 12 Kohlenstoffatomen, Oxethylgruppen der allgemeinen Formel -(CH₂-CH₂-O)ₙ-R, worin n eine Zahl von 1 bis 10, und R Wasserstoff oder eine Alkyl(C₁-C₄)- oder Acylgruppe darstellen, ferner ein- oder mehrkernige aromatische Reste und/oder araliphatische Reste bedeuten, wobei die aliphatischen, aromatischen und araliphatischen Reste durch Hydroxy-, Alkoxy(C₁-C₄)-, sekundäre oder tertiäre Aminogruppen, Säureamidgruppen oder Säureimidgruppen substituiert sein können, wobei die Alkyl-, Cycloalkyl-, Aralkyl- und Arylreste für R₁ bis R₄ durch Fluor-, Chlor- oder Bromatome substituiert sein können, und in welcher X ein Phosphor-, Arsen- oder Antimonatom bedeutet, wobei für den Fall, daß X ein Arsenoder Antimonatom darstellt, mindestens einer der Reste R₆ bis R₉ kein Wasserstoffatom darstellt und A⁻ das Äquivalent eines Anions bedeutet.

2. Verfahren nach Anspruch 1, dadurch gekennzeichnet, daß in den dort angegebenen allgemeinen Formeln 1, 2 und 3 R₁ bis R₄ unabhängig voneinander Wasserstoffatome, geradkettige oder verzweigte Alkylgruppen von 1 bis 22 Kohlenstoffatomen, Oxethylgruppen der allgemeinen Formel -(CH₂-CH₂-O)ₙ-R, worin R ein Wasserstoffatom oder eine Alkyl(C₁-C₄)-, Acetyl-, Benzoyl- oder Naphthoylgruppe, und n eine Zahl von 1 bis 4 bedeuten, ferner Cyclopentyl- oder Cyclohexylgruppen, Phenyl-, 1-Naphthyl-, 2-Naphthyl-, Tolyl-, Biphenyl- oder Benzylreste, wobei die genannten aliphatischen, araliphatischen und aromatischen Reste durch Hydroxyl-, Alkoxy(C₁-C₄)-, N-Monoalkyl(C₁-C₄)-amino-, N,N-Dialkyl-(C₁-C₄)-amino-, Phthalimid- oder Naphthalimidgruppen, Fluor-, Chlor- oder Bromatome substituiert sein können, bedeuten, R₅ ein Wasserstoff-, Fluor-, Chlor- oder Bromatom oder eine Alkyl(C₁-C₆)-, Alkoxy(C₁-C₆)- oder primäre Aminogruppe bedeutet, und A⁻ das Äquivalent eines anorganischen Anions darstellt, und wobei R₁ und R₃ als Teil eines Ringsystems ein Pyridin- oder Piperidinsalz oder ein Derivat davon sein können, und wobei im Fall der allgemeinen Formel (3) R₆ bis R₉ unabhängig voneinander Wasserstoffatome, geradkettige oder verzweigte Alkylgruppen von 1 bis 22 Kohlenstoffatomen, Oxethylgruppen der allgemeinen Formel -(CH₂-CH₂-O)ₙ-R, worin n eine Zahl von 1 bis 4 und R ein Wasserstoffatom, eine Alkyl(C₁-C₄)-, Acetyl-, Benzoyl- oder Naphthoylgruppe darstellen, ferner Phenyl-, 1-Naphthyl-, 2-Naphthyl-, Tolyl-, Biphenyl- oder Benzylreste bedeuten, wobei die genannten aliphatischen, aromatischen und araliphatischen Reste durch Hydroxy-, Alkoxy(C₁-C₄)-, Monoalkyl(C₁-C₆)-amino-, Dialkyl(C₁-C₆)-amino-, aliphatische Säureamidgruppen der Formeln -CO-NH-R₁ oder 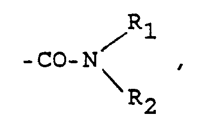 worin R₁ und R₂ Alkyl(C₁-C₃₀)-gruppen bedeuten, ferner durch Phthalimid- oder Naphthalimidgruppen substituiert sein können, wobei die genannten Alkyl-, Cycloalkyl-, Aralkyl- und Arylreste für R₁ bis R₄ durch Fluor-, Chlor- oder Bromatome substituiert sein können, und in welcher X ein Phosphor-, Arsen- oder Antimonatom bedeutet, wobei für den Fall, daß X ein Arsen- oder Antimonatom bedeutet, mindestens einer der Reste R₆ bis R₉ kein Wasserstoffatom darstellt, und A⁻ das Äquivalent eines anorganischen Anions darstellt.

3. Verfahren nach mindestens einem der Ansprüche 1 und 2, dadurch gekennzeichnet, daß die salzartigen, kationischen Verbindungen in eine Menge von etwa 0,05 bis etwa 15 Gewichtsprozent, bezogen auf das mit der salzartigen, kationischen Verbindung versehene Pigment, Zugesetzt werden.

4. Verfahren nach mindestens einem der Ansprüche 1 und 2, dadurch gekennzeichnet, daß die salzartigen, kationischen Verbindungen in einer Menge von etwa 1 bis etwa 8 Gewichtsprozent, bezogen auf das mit der salzartigen kationischen Verbindung versehene Pigment, zugesetzt werden.

5. Verfahren nach mindestens einem der Ansprüche 1 bis 4, dadurch gekennzeichnet, daß die salzartigen, kationischen Verbindungen eine Löslichkeit von >10 g/l in Wasser oder in wässrigem Medium bei 20 °C aufweisen.

6. Verwendung der nach mindestens einem der Ansprüche 1 bis 5 mit den salzartigen, kationischen Verbindungen versehenen Azopigmente zur Herstellung von Tonern oder Entwicklern, die zum elektrophotographischen Kopieren bzw. Vervielfältigen von Vorlagen oder zum Drucken von elektronisch, optisch oder magnetisch gespeicherten Informationen oder im Colorproofing eingesetzt werden.

7. Verwendung der nach mindestens einem der Ansprüche 1 bis 5 mit den salzartigen, kationischen Verbindungen versehenen Azopigmente zur Herstellung von Pulvern oder Pulverlacken, die zur Oberflächenbeschichtung von Gegenständen aus Metall, Holz, Kunststoff, Glas, Keramik, Beton, Textilmaterial, Papier oder Kautschuk eingesetzt werden.

## Claims

1. A process for specifically influencing the tribo-electric effect of azo pigments in electrophotographic toners or developers or in powders for surface coating, which comprises adding to the azo pigments at the coupling reaction stage, at the laking stage or in the course of finishing at least one saltlike cationic compound of the general formulae 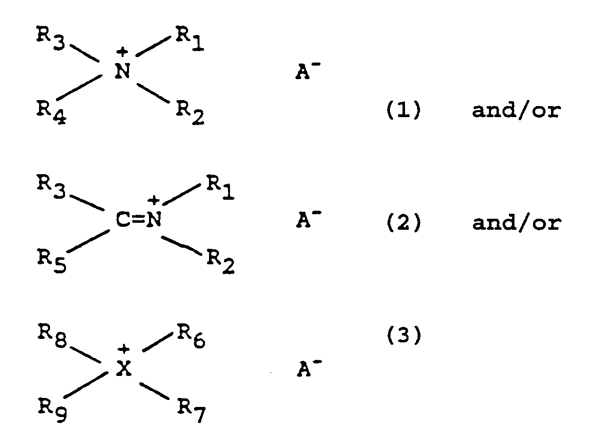 wherein in the case of the general formulae (1) and (2), R₁, R₂, R₃ and R₄ are independently of one another straight-chain or branched alkyl groups of 1 to 30 carbon atoms, oxyethyl groups of the general formula -(CH₂-CH₂-O)ₙ-R, wherein R is a hydrogen atom or an alkyl(C₁-C₄) or an acyl group and n is a number from 1 to 10, monocyclic or polycyclic cycloaliphatic radicals of 5 to 12 carbon atoms, monocyclic or polycyclic aromatic or araliphatic radicals, which aliphatic, araliphatic and aromatic radicals may be substituted by hydroxyl, alkoxy(C₁-C₄)-, primary, secondary or tertiary amino groups, acid amide groups or fluorine, chlorine or bromine atoms, R₅ is a hydrogen, fluorine, chlorine or bromine atom or an alkyl (C₁-C₆)-, alkoxy(C₁-C₆)- or primary amino group and A^{ϑ} is one equivalent of an anion, and where R₁ and R₃ can be part of a ring system of 5 to 7 carbon atoms which may be interrupted by 1 or 2 heteroatoms and may contain 1 to 3 double bonds, and wherein in the case of general formula (3) R₆, R₇, R₈ and R₉ are independently of one another hydrogen atoms, straight-chain or branched alkyl groups of 1 to 30 carbon atoms, monocyclic or polycyclic cycloaliphatic radicals of 5 to 12 carbon atoms, oxyethyl groups of the general formula -(CH₂-CH₂-O)ₙ-R, wherein n is a number from 1 to 10, and R is hydrogen or an alkyl (C₁-C₄) or an acyl group, also monocyclic or polycyclic aromatic radicals and/or araliphatic radicals, which aliphatic, aromatic and araliphatic radical (sic) may be substituted by hydroxyl, alkoxy(C₁-C₄), secondary or tertiary amino groups, acid amide groups or acid imide groups, where the alkyl, cycloalkyl, aralkyl and aryl radicals for R₁ to R₄ may be substituted by fluorine, chlorine or bromine atoms, and in which X is a phosphorus, arsenic or antimony atom, although if X is an arsenic or antimony atom at least one of the radicals R₆ to R₉ is not a hydrogen atom and A⁻ is one equivalent of an anion.

2. The process as claimed in claim 1, wherein in the general formulae 1, 2 and 3 indicated there R₁ to R₄ are independently of one another hydrogen atoms, straight-chain or branched alkyl groups of 1 to 22 carbon atoms, oxyethyl groups of the general formula -(CH₂-CH₂-O)ₙ-R, wherein R is a hydrogen atom or an alkyl(C₁-C₄), acetyl, benzoyl or naphthoyl group, and n is a number from 1 to 4, also cyclopentyl or cyclohexyl groups, phenyl, 1-naphthyl, 2-naphthyl, tolyl, biphenyl or benzyl radicals, which aliphatic, araliphatic and aromatic radicals mentioned may be substituted by hydroxyl, alkoxy(C₁-C₄), N-monoalkyl(C₁-C₄)amino, N,N-dialkyl(C₁-C₄)amino, phthalimide or naphthalimide groups, fluorine, chlorine or bromine atoms, R₅ is a hydrogen, fluorine, chlorine or bromine atom or an alkyl (C₁-C₆), alkoxy (C₁-C₆) or primary amino group, and A⁻ is one equivalent of an inorganic anion, and where R₁ and R₃ as part of a ring system can be a pyridine or piperidine salt or a derivative thereof, and where in the case of the general formula (3) R₆ to R₉ are independently of one another hydrogen atoms, straight-chain or branched alkyl group of 1 to 22 carbon atoms, oxyethyl groups of the general formula -(CH₂-CH₂-O)ₙ-R, wherein n is a number from 1 to 4 and R is a hydrogen atom, an alkyl(C₁-C₄), acetyl, benzoyl or naphthoyl group, also phenyl, 1-naphthyl, 2-naphthyl, tolyl, biphenyl or benzyl radicals, which aliphatic, aromatic and araliphatic radicals mentioned may be substituted by hydroxyl, alkoxy(C₁-C₄), monoalkyl(C₁-C₆)amino, dialkyl(C₁-C₆)amino, aliphatic acid amide groups of the formulae -CO-NH-R₁ or 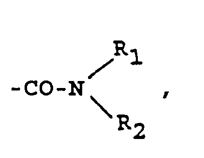 wherein R₁ and R₂ are alkyl (C₁-C₃₀) groups,
also by phthalimide or naphthalimide groups, which alkyl, cycloalkyl, aralkyl and aryl radicals mentioned for R₁ to R₄ may be substituted by fluorine, chlorine or bromine atoms and in which X is phosphorus, arsenic or antimony atom, although if X is an arsenic or antimony atom at least one of the radicals R₆ to R₉ is not a hydrogen atom, and A⁻ is one equivalent of an inorganic anion.

3. The process as claimed in either of claims 1 and 2, wherein the saltlike cationic compounds are added in an amount of about 0.05 to about 15 percent by weight, based on the pigment provided with the saltlike, cationic compound.

4. The process as claimed in either of claims 1 and 2, wherein the saltlike cationic compounds are added in an amount of about 1 to about 8 percent by weight, based on the pigment provided with the saltlike cationic compound.

5. The process as claimed in one or more of claims 1 to 4, wherein the saltlike, cationic compounds have a solubility of > 10 g/l of water or aqueouss medium at 20°C.

6. The use of the azo pigments provided as claimed in one or more of claims 1 to 5 with saltlike, cationic compounds, for producing toners or developers which are used for the electrographic (sic) copying or manifolding of originals or for printing electronically, optically or magnetically stored data or in color-proofing.

7. The use of the azo pigments provided as claimed in one or more of claims 1 to 5 with saltlike cationic compounds, for producing powders or powder coatings used for the surface coating of articles made of metal, wood, plastics, glass, ceramics, concrete, textile material, paper or rubber.

## Revendications

1. Procédé pour influencer de façon adéquate l'effet triboélectrique de pigments azoïques dans des toners ou révélateurs électrophotographiques ou dans des poudres pour le revêtement de surfaces, caractérisé en ce que l'on ajoute aux pigments azoïques lors de la réaction de copulation, de la mise sous forme de laque ou du traitement final au moins un composé cationique salin de formule générale 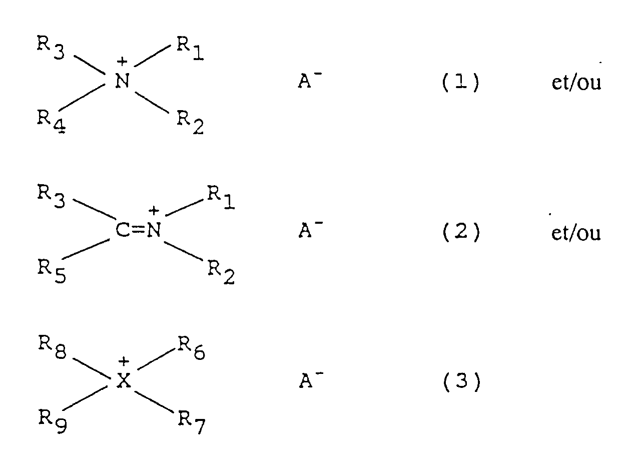 dans lesquelles, en ce qui concerne les formules générales (1) et (2), R₁, R₂, R₃ et R₄ représentent indépendamment les uns des autres des atomes d'hydrogène, des groupes alkyle linéaires ou ramifiés de 1 à 30 atomes de carbone, des groupes oxyéthyle de formule générale -(CH₂-CH₂-O)ₙ-R, où R représente un atome d'hydrogène ou un groupe alkyle en C₁-C₄ ou acyle et n est un nombre de 1 à 10, des restes cycloaliphatiques mono- ou polycycliques de 5 à 12 atomes de carbone, des restes aromatiques ou araliphatiques mono- ou polycycliques, les restes aliphatiques, araliphatiques et aromatiques pouvant être substitués par des groupes hydroxy, alcoxy en C₁-C₄, amino primaires, secondaires ou tertiaires, des groupes amide ou des atomes de fluor, de chlore ou de brome, R₅ représente un atome d'hydrogène, de fluor, de chlore ou de brome ou un groupe alkyle en C₁-C₆, alcoxy en C₁-C₆ ou amino primaire, et A⁻ est l'équivalent d'un anion, R₁ et R₃ pouvant faire partie d'un système cyclique de 5 à 7 atomes de carbone qui peut être interrompu par 1 ou 2 hétéroatomes et qui peut contenir 1 à 3 doubles liaisons et, en ce qui concerne la formule générale (3), R₆, R₇, R₈ et R₉ représentent indépendamment les uns des autres des atomes d'hydrogène, des groupes alkyle linéaires ou ramifiés de 1 à 30 atomes de carbone, des restes cycloaliphatiques mono- ou polycycliques de 5 à 12 atomes de carbone, des groupes oxyéthyle de formule générale -(CH₂-CH₂-O)ₙ-R, où n est un nombre de 1 à 10 et R représente un atome d'hydrogène ou un groupe alkyle en C₁-C₄ ou acyle, ou encore des restes aromatiques mono- ou polycycliques et/ou des restes araliphatiques, les restes aliphatiques, araliphatiques et aromatiques pouvant être substitués par des groupes hydroxy, alcoxy en C₁-C₄, amino secondaires ou tertiaires, des groupes amide ou des groupes imide, les restes alkyle, cycloalkyle, aralkyle et aryle pour R₁ à R₄ pouvant être substitués par des atomes de fluor, de chlore ou de brome, et X représente un atome de phosphore, d'arsenic ou d'antimoine, et, lorsque X représente un atome d'arsenic ou d'antimoine, au moins l'un des restes R₆ à R₉ est différent d'un atome d'hydrogène, et A⁻ est l'équivalent d'un anion.

2. Procédé selon la revendication 1, caractérisé en ce que, dans les formules générales 1, 2 et 3 qui y sont indiquées, les R₁ à R₄ représentent indépendamment les uns des autres des atomes d'hydrogène, des groupes alkyle linéaires ou ramifiés de 1 à 22 atomes de carbone, des groupes oxyéthyle de formule générale -(CH₂-CH₂-O)ₙ-R où R représente un atome d'hydrogène ou un groupe alkyle en C₁-C₄, acétyle, benzoyle ou naphtoyle, et n est un nombre de 1 à 4, ou encore des groupes cyclopentyle ou cyclohexyle, des restes phényle, 1-naphtyle, 2-naphtyle, tolyle, biphényle ou benzyle, les restes aliphatiques, araliphatiques et aromatiques cités pouvant être substitués par des groupes hydroxy, alcoxy en C₁-C₄, N-mono(alkyl en C₁-C₄)amino, N,N-di(alkyl en C₁-C₄)amino, phtalimide ou naphtalimide, des atomes de fluor, de chlore ou de brome, R₅ représente un atome d'hydrogène, de fluor, de chlore ou de brome ou un groupe alkyle en C₁-C₆, alcoxy en C₁-C₆ ou amino primaire, et A⁻ est l'équivalent d'un anion inorganique, R₁ et R₃ pouvant faire partie du système cyclique d'un sel de pyridine ou de pipéridine ou d'un de leurs dérivés et, en ce qui concerne la formule générale (3), les R₆ à R₉ représentent indépendamment les uns des autres des atomes d'hydrogène, des groupes alkyle linéaires ou ramifiés de 1 à 22 atomes de carbone, des groupes oxyéthyle de formule générale -(CH₂-CH₂-O)ₙ-R, où n est un nombre de 1 à 4 et R représente un atome d'hydrogène ou un groupe alkyle en C₁-C₄, acétyle, benzoyle ou naphtoyle, ou encore des restes phényle, 1-naphtyle, 2-naphtyle, tolyle, biphényle ou benzyle, les restes aliphatiques, aromatiques et araliphatiques cités pouvant être substitués par des groupes hydroxy, alcoxy en C₁-C₄, mono(alkyl en C₁-C₆)amino, di(alkyl en C₁-C₆)amino, des groupes amide aliphatiques de formule -CO-NH-R₁ ou 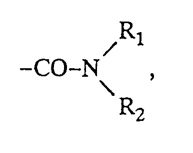 où R₁ et R₂ représentent des groupes alkyle en C₁-C₃₀, ou encore par des groupes phtalimide ou naphtalimide, les restes alkyle, cycloalkyle, aralkyle et aryle cités pour R₁ à R₄ pouvant être substitués par des atomes de fluor, de chlore ou de brome, et X représente un atome de phosphore, d'arsenic ou d'antimoine, et, dans le cas où X représente un atome d'arsenic ou d'antimoine, au moins l'un des restes R₆ à R₉ est différent d'un atome d'hydrogène, et A⁻ est l'équivalent d'un anion inorganique.

3. Procédé selon l'une au moins des revendications 1 et 2, caractérisé en ce que les composés cationiques salins sont utilisés en une quantité d'environ 0,05 à environ 15 % en masse par rapport au pigment contenant le composé cationique salin.

4. Procédé selon l'une au moins des revendications 1 et 2, caractérisé en ce que les composés cationiques salins sont utilisés en une quantité d'environ 1 à environ 8 % en masse par rapport au pigment contenant le composé cationique salin.

5. Procédé selon l'une au moins des revendications 1 à 4, caractérisé en ce que les composés cationiques salins présentent une solubilité supérieure à 10 g/l d'eau ou de milieu aqueux à 20°C.

6. Utilisation des pigments azoïques contenant les composés cationiques salins selon l'une au moins des revendications 1 à 5 pour la préparation de toners ou de révélateurs qui sont utilisés pour le tirage de copies ou la reproduction électrophotographiques de documents ou pour l'impression d'informations enregistrées par un moyen électronique, optique ou magnétique, ou pour le tirage d'épreuves en couleurs.

7. Utilisation des pigments azoïques contenant les composés cationiques salins selon l'une au moins des revendications 1 à 5 pour la préparation de poudres ou de laques en poudre qui sont utilisées pour le revêtement en surface d'objets en métal, en bois, en matière plastique, en verre, en céramique, en béton, en matière textile, en papier ou en caoutchouc.
